# FASCICULE DE BREVET EUROPEEN

(11) **EP 0 930 280 B1**
(45) Date de publication et mention de la délivrance du brevet: **10.04.2002**
(21) Numéro de dépôt: 98440006.9
(22) Date de dépôt: 16.01.1998
(51) Int. Cl.: C04B 28/02, B65D 19/38

(54) **Composition destinée à la fabrication de plots pour palettes de manutention ou d'éléments de construction tels que panneaux, moellons ou autres**
Zusammensetzung zur Herstellung von Palettenfüssen oder von Bauteilen wie Bauplatten, Mauerweksteinen und dergleichen
Composition for the fabrication of pallet feet, or of construction elements such as panels, paving stones and the like

(43) Date de publication de la demande: 21.07.1999
(73) Titulaire: INNOLINK SA, 1206 Genève (CH)
(72) Inventeur: INNOLINK SA, 1206 Genève (CH)
(74) Mandataire: Rhein, Alain

(56) Documents cités:
- FR-A- 2 575 136
- FR-A- 2 664 262
- GB-A- 2 300 417
- PATENT ABSTRACTS OF JAPAN vol. 097, no. 008, 29 août 1997 & JP 09 110512 A (SEKISUI CHEM CO LTD), 28 avril 1997,

## Description

La présente invention a pour objet une composition destinée à la fabrication de plots pour palettes de manutention ou d'éléments de construction tels que panneaux isolants, moellons ou autres.

On sait que les palettes de manutention utilisées pour le déplacement et le transport de marchandises, notamment de cartons ou de caisses de produits, sont généralement réalisées en bois et constituées de deux plateaux séparés par des plots formant entretoises qui créent un espace pour le passage des fourches des chariots élévateurs.

Les plots de ces palettes sont le plus souvent réalisés en bois scié, ce qui grève le coût de fabrication desdites palettes.

Diverses tentatives ont été faites pour remplacer les plots de bois par des plots en matériaux moins chers, tels que des matières plastiques, mais ces matériaux présentent l'inconvénient majeur d'être polluants pour l'environnement, en sorte que les palettes usagées comportant de tels plots ne sont pas jetables.

Le FR 2 664 262 propose une composition pour la réalisation de bétons légers et produits en résultant, caractérisée en ce qu'elle contient des sciures d'écorce et des sciures en bois de granulométrie comprise entre environ 0,2 et 8 mm mélangées dans un rapport pondéral compris entre 10 et 80 % de sciures d'écorce par rapport aux sciures de bois, ladite composition contenant un hydrofuge et au moins un liant hydraulique du genre ciment, chaux ou plâtre.

La .présente invention a pour but de remédier à ces inconvénients en proposant une composition qui allie à l'avantage d'un coût peu élevé celui d'être non polluante pour l'environnement, et qui permet de réaliser tant des plots pour palettes que des éléments de construction tels que des panneaux isolants ou des moellons.

La composition selon l'invention se caractérise essentiellement en ce qu'elle met en oeuvre des déchets ligneux, tels que des copeaux de bois ou de la sciure, intimement mélangés à du ciment, du plâtre, de la chaux, de la silice et de l'eau.

Conformément à l'invention, les proportions des différents constituants mis en oeuvre sont les suivantes :
- déchets ligneux : 3 à 15 volumes
- ciment : 1 à 2 volumes
- plâtre : 1 à 2 volumes
- chaux : 1 à 2 volumes
- eau : 1/2 à 5 volumes
- silice : 1 à 10 % en volume.

Selon le produit que l'on veut obtenir, les proportions des différents constituants peuvent varier dans d'assez larges limites, les déchets ligneux étant mis en oeuvre dans des proportions qui varient en sens inverse de la dureté voulue pour le produit fini.

Ainsi dans le cas où l'on veut réaliser des éléments de construction les déchets ligneux sont mis en oeuvre à raison d'environ 10 à 15 volumes.

Dans le cas où l'on veut obtenir des plots pour palettes de manutention, les déchets ligneux sont mis en oeuvre à raison d'environ 3 à 10 volumes, le produit obtenu présentant une dureté plus grande du fait de sa plus grande teneur en ciment et en plâtre.

Le mélange des constituants est réalisé dans un mélangeur approprié de type connu en soi, où l'eau est de préférence introduite après avoir été légèrement préchauffée jusqu'à environ 30°C, de manière à accélérer la prise du ciment et à permettre un gain de temps au démoulage du produit fini. La proportion d'eau ajoutée au mélange des autres constituants est bien entendu fonction du taux d'humidité des déchets ligneux mis en oeuvre, et peut être modulée en conséquence.

Le mélange obtenu est transféré dans des moules de formes et de dimensions adaptées au produit que l'on désire obtenir.

Dans le cas de plots de palettes le mélange est moulé de préférence dans des moules cylindriques, mais il peut l'être aussi dans des moules cubiques ou parallélépipédiques.

Dans le cas de matériaux isolants, le mélange est moulé dans des moules parallélépipédiques de dimensions choisies, de manière à fournir des panneaux, des briques, des moellons, ou autres.

Dans l'un ou l'autre cas on mélange les constituants dans un mélangeur classique pendant 5 à 10 minutes, puis on le transfère dans les moules.

Le démoulage des produits finis peut être effectué après un laps de temps très court, de l'ordre de 1 à 30 minutes, ce qui constitue un avantage appréciable en gain de temps.

Les déchets ligneux mis en oeuvre pour la fabrication des plots selon l'invention doivent être de petites dimensions pour favoriser la qualité du mélange réalisé. Ainsi les copeaux de bois ont de préférence des dimensions moyennes de l'ordre de 1 cm de long sur 1 mm de large, et ils peuvent être utilisés en mélange avec de la sciure de bois. On peut également utiliser uniquement de la sciure.

L'addition de chaux et de silice au mélange constitué par le ciment, le plâtre, l'eau et les déchets ligneux assure au produit final une meilleure cohésion, donc une meilleure tenue dans le temps, qu'il s'agisse de plots de palettes ou d'éléments de construction.

D'autres avantages et caractéristiques de la composition selon l'invention ressortiront plus clairement des exemples ci-après qui en décrivent deux modes de réalisation appliqués, l'un à la fabrication de plots de palettes et l'autre à la fabrication de panneaux de construction.

### EXEMPLE 1

### Fabrication de plots pour palettes

Dans un mélangeur classique on introduit successivement :
- 10 litres de ciment
- 10 litres de plâtre
- 10 litres de chaux
- 50 litres de déchets de bois
- 10 litres d'eau à 30°C
- 10 litres de silice.

On mélange pendant 5 minutes puis on introduit le mélange dans des moules qui peuvent être cylindriques ou parallélépipédiques, selon la forme désirée pour les plots.

Au bout de 1 à 10 minutes, selon la température et le taux d'humidité de l'atmosphère ambiante, on peut démouler les plots, qui présentent une dureté et un taux d'humidité autorisant leur stockage. Après séchage dans un espace clos sec pendant environ une semaine les plots peuvent être utilisés.

Les plots obtenus présentent une très bonne résistance mécanique et une excellente tenue dans le temps.

### EXEMPLE 2

### Fabrication de panneaux de construction

Suivant le procédé de l'exemple 1 on introduit successivement dans un mélangeur :
- 10 litres de ciment
- 10 litres de plâtre
- 10 litres de chaux
- 120 litres de déchets de bois
- 20 litres d'eau à 30°C
- 30 litres de silice

On mélange pendant 5 minutes puis on transfère le mélange obtenu dans des moules parallélépipédiques de dimensions choisies.

Au bout de 3 à 15 minutes, selon l'atmosphère ambiante, on peut démouler les panneaux, qui peuvent être stockés et utilisés après environ 1 semaine de séchage.

Les panneaux obtenus présentent d'excellentes qualités d'isolation thermique et phonique, et une excellente tenue dans le temps.

## Revendications

1. Composition destinée à la fabrication de plots pour palettes de manutention ou d'éléments de construction tels que panneaux, moellons ou autres, **caractérisée en ce qu'**elle met en oeuvre des déchets ligneux de petites dimensions associés à du ciment, du plâtre, de la chaux, de la silice et de l'eau, les proportions de ces différents constituants étant les suivantes :
- déchets de bois : 3 à 15 volumes
- ciment : 1 à 2 volumes
- plâtre : 1 à 2 volumes
- chaux : 1 à 2 volumes
- eau : 1/2 à 5 volumes
- silice : 1 à 10 % en volume.

2. Composition selon la revendication 1, **caractérisée en ce que** les déchets de bois sont des copeaux de dimensions moyennes de l'ordre de 1 cm de long sur 1 mm de large.

3. Composition selon la revendication 1 ou la revendication 2, **caractérisée en ce que** les déchets de bois sont des copeaux associés à de la sciure.

4. Composition selon l'une des revendications 1 à 3, destinée à la fabrication de plots pour palettes de manutention, **caractérisée en ce qu'**elle comprend 3 à 10 volumes de déchets de bois.

5. Composition selon l'une des revendications 1 à 3, destinée à la fabrication d'éléments de construction, **caractérisée en ce qu'**elle comprend 10 à 15 volumes de déchets de bois.

6. Plots obtenus par moulage du mélange des différents constituants de la composition qui fait l'objet de la revendication 4.

7. Eléments de construction obtenus par moulage du mélange des différents constituants de la composition qui fait l'objet de la revendication 5.

## Claims

1. Composition for the manufacture of logs for handling pallets or building elements such as panels, rubble-work or the like, **characterised in that** it implements small-sized wood waste associated with cement, plaster, lime, silica and water, the proportions of these various components being as follows :
- wood waste : 3 to 15 volumes
- cement: 1 to 2 volumes
- plaster: 1 to 2 volumes
- lime: 1 to 2 volumes
- water: 1/2 to 5 volumes
- silica: 1 to 10 vol.-%.

2. Composition according to claim 1, **characterised in that** the wood waste is comprised of middle-size wood chips in the range of 1 cm long and 1 mm wide.

3. Composition according to claim 1 or claim 2, **characterised in that** the wood waste is comprised of wood chips associated with sawdust.

4. Composition according to any of claims 1 to 3, for the manufacture of logs for handling pallets, **characterised in that** it comprises 3 to 10 volumes of wood waste.

5. Composition according to any of claims 1 to 3, for the manufacture of logs for handling pallets, **characterised in that** it comprises 10 to 15 volumes of wood waste.

6. Logs obtained through moulding the mixture of the various components of the composition object of claim 4.

7. Building elements obtained through moulding the mixture of the various components of the composition object of claim 5.

## Patentansprüche

1. Zusammensetzung für die Herstellung von Blöckem für Handlingspalletten oder Bauelemente wie Platten, Bruchsteinplatten oder dergleichen, **dadurch gekennzeichnet, daß** sie Holzabfälle kleiner Abmessungen anwendet, die mit Zement, Gips, Kalk, Kieselerde und Wasser verbunden sind, wobei die Mengenverhältnisse dieser verschiedenen Bestandteile wie folgt sind:
- Holzabfälle: 3 bis 15 Volumen
- Zement: 1 bis 2 Volumen
- Gips : 1 bis 2 Volumen
- Kalk: 1 bis 2 Volumen
- Wasser : 1/2 to 5 Volumen
- Kieselerde : 1 bis 10 Vol.-%.

2. Zusammensetzung nach Anspruch 1, **dadurch gekennzeichnet, daß** die Holzabfälle aus mittelgroßen Holzspänen der Größenordnung von 1 cm lang auf 1 mm breit bestehen.

3. Zusammensetzung nach Anspruch 1 oder Anspruch 2, **dadurch gekennzeichnet, daß** die Holzabfälle aus mit Sägemehl verbundenen Holzspänen bestehen.

4. Zusammensetzung nach einem der Ansprüche 1 bis 3, für die Herstellung von Blöckem für Handlingspalletten, **dadurch gekennzeichnet, daß** sie 3 bis 10 Volumen Holzabfälle umfaßt.

5. Zusammensetzung nach einem der Ansprüche 1 bis 3, für die Herstellung von Blöckem für Handlingspalletten, **dadurch gekennzeichnet, daß** sie 10 bis 15 Volumen Holzabfälle umfaßt.

6. Blöcker erhalten durch Formgießen der Mischung der verschiedenen Bestandteile der Zusammensetzung Gegenstand des Anspruchs 4.

7. Bauelemente erhalten durch Formgießen der Mischung der verschiedenen Bestandteile der Zusammensetzung Gegenstand des Anspruchs 5.
